# EUROPEAN PATENT APPLICATION

(11) **EP 0 715 044 A1**
(43) Date of publication of application: **05.06.1996**
(21) Application number: 95118874.7
(22) Date of filing: 30.11.1995
(51) Int. Cl.: E05B 49/00

(54) **Lock having an interrogation antenna and method of construction**

(30) Priority: 30.11.1994 US 347772
(71) Applicant: TEXAS INSTRUMENTS INCORPORATED, Dallas Texas 75265 (US)
(72) Inventor: D'Hont, Loek, Garland, TX 75044 (US)
(74) Representative: Schwepfinger, Karl-Heinz, Dipl.-Ing.

(57) **Abstract**

A key lock (10) having an interrogation antenna (12) is provided. The key lock (10) includes a lock mechanism (14) and an interrogation antenna (12). The interrogation antenna (12) comprises an antenna winding disposed around the lock mechanism (14). The antenna winding has a folded dipole shape forming a first side (20) and a second side (22) such that the first side (20) is field reversed with respect to the second side (22).

## Description

### TECHNICAL FIELD OF THE INVENTION

This invention relates in general to the field of electronic devices, and more particularly to an improved key lock having an interrogation antenna and a method of construction.

### BACKGROUND OF THE INVENTION

Key lock systems are used to provide secure access to houses, buildings, cars and other such property. Generally, a key lock system includes a key lock and a key. The key lock generally includes a lock housing and a lock mechanism having a key hole. The key is constructed such that it engages the key hole and locks and unlocks the lock mechanism. Only a properly constructed key will function in a given key lock. One type of conventional key lock is a key lock having a rotating lock cylinder. In this type of key lock, a number of lock pistons are moved by a key inserted into a key hole in the rotating lock cylinder. The correct key will position the lock pistons such that the rotating lock cylinder will rotate with the key. In this manner, the lock is locked and unlocked.

It is advantageous for some applications to provide security in addition to a mechanical match between the key and the key lock. One way to provide additional security is to construct the key lock such that the key lock can electronically interrogate and identify whether a key is the correct key. Some of these key lock systems include a transponder in the key and an integration antenna and electronics in the key lock. If the key is not correct, the key lock can be electrically locked to prevent mechanical operation. If the key is the correct key, the key lock can be released allowing mechanical operation such that the key will unlock or lock the lock mechanism.

It is a problem with key interrogation systems to provide an interrogation antenna for the key lock that efficiently receives a signal from a transponder in a key. Conventional interrogation antennas comprise a winding package encircling the lock mechanism. These interrogation antennas experience problems with noise sources, experience problems with reading additional keys, require relatively large power consumption and experience problems with detuning after being installed in the key lock.

### SUMMARY OF THE INVENTION

A need has arisen for a key lock having an interrogation antenna that eliminates noise and more efficiently reads a signal from a transponder in a key.

In accordance with the present invention, an improved key lock having an interrogation antenna and a method of construction are provided that substantially eliminate or reduce disadvantages and problems associated with conventional key locks.

According to one embodiment of the present invention, a key lock having an interrogation antenna is provided. The key lock includes a lock mechanism and an interrogation antenna. The interrogation antenna comprises an antenna winding disposed around the lock mechanism. The antenna winding has a folded dipole shape forming a first side and a second side such that the first side is field reversed with respect to the second side.

### BRIEF DESCRIPTION OF THE DRAWINGS

A more complete understanding of the present invention and advantages thereof may be acquired by reference to the following description taken in conjunction with the accompanying drawings in which like reference numbers indicate like features, and wherein:
FIGURE 1 is a front cross-sectional view of a key lock having an interrogation antenna constructed according to the teachings of the present invention; and
FIGURE 2 is a side view with portions broken away of a key lock having an interrogation antenna constructed according to the teachings of the present invention.

### DETAILED DESCRIPTION OF THE INVENTION

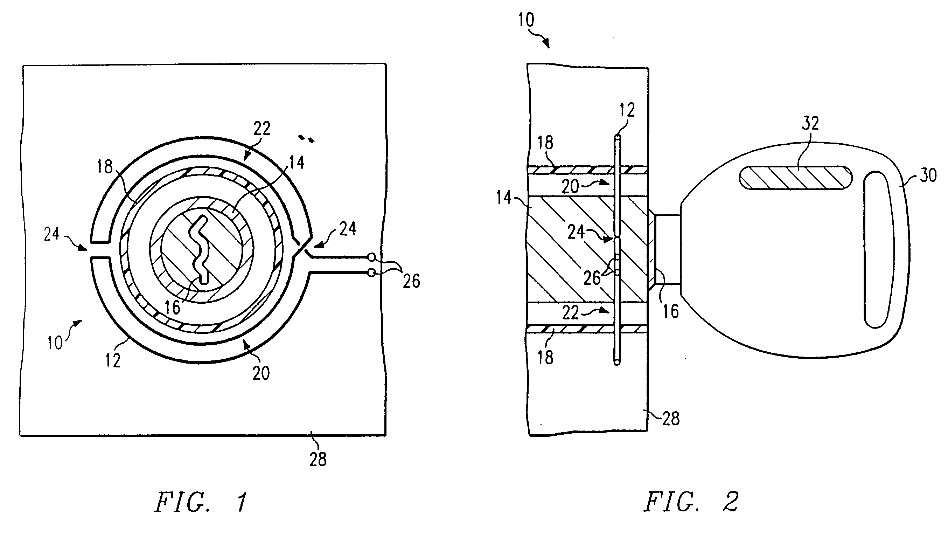

FIGURE 1 is a front cross-sectional view of a key lock, indicated generally at 10, including an interrogation antenna 12 constructed according to the teachings of the present invention. Key lock assembly 10 includes a lock mechanism 14 having a key hole 16. A nonferrometallic shielding ring 18 is optionally disposed around lock mechanism 14, as shown.

Interrogation antenna 12 comprises a folded dipole winding having a first side 20 and a second side 22. Interrogation antenna 12 is an air coil antenna having field dead zones 24 due to the folded dipole nature. In an alternate embodiment of the present invention, interrogation antenna 12 comprises a ferrite core antenna. As shown in FIGURE 1, a line connecting field dead zones 24 would substantially bisect lock mechanism 14 and keyhole 16. Interrogation antenna 12 further comprises a first and second antenna terminals 26. Key lock assembly 10 is disposed in a housing 28. In one embodiment of the present invention, key lock 10 is sized to be disposed in the steering column of an automobile, and housing 28 comprises a portion of the steering column of an automobile.

A key lock having an interrogation antenna constructed according to the teachings of the present invention more efficiently receives a signal from a transponder in an associated key. Technical advantages of the interrogation antenna of the present invention includes eliminating or reducing the effect of noise, eliminating or reducing reads of a second key, which may be proximate the key lock during the reading of a first key inserted into the key lock. The present invention also allows for a relatively high antenna Q and will not become detuned during installation.

FIGURE 2 is a side view with portions broken away of key lock 10 of FIGURE 1. As shown in FIGURE 2, a key 30 can engage key hole 16. Key 30 includes a transponder 32 disposed asymmetrically within key 30. When key 30 engages key hole 16, interrogation antenna 12 is oriented such that transponder 32 is asymmetric with respect to a line connecting field dead zones 24. As shown, first side 20 and second side 22 of interrogation antenna 12 are located at different distances from transponder 32 of key 30 when key 30 engages key hole 16.

Interrogation antenna 12 of key lock 10 operates in a folded dipole manner. First side 20 of interrogation antenna 12 is field reversed with respect to second side 22. First side 20 and second side 22 are constructed having equal coil area.

This structure of interrogation antenna 12 prevents the output of a signal from interrogation antenna 12 when interrogation antenna 12 is receiving a homogeneous signal. The homogeneous signal is equal in amplitude and opposite in phase in first side 20 and second side 22, thus signals produced by each side are cancelled. In general, noise sources produce homogeneous signals because noise sources are relatively distant from interrogation antenna 12. Consequently, interrogation antenna 12 eliminates problems with noise sources. In an alternate embodiment of the present invention, interrogation antenna 12 is not balanced. However, high antenna Q and low detuning advantages can be realized by using a non-balanced air coil antenna.

Transponder 32 in key 30, unlike a noise source, is positioned relatively close to interrogation antenna 12 when key 30 engages key hole 16. Transponder 32 also is positioned closer to first side 20 of interrogation antenna 12 than to second side 22. Consequently, interrogation antenna 12 generates an output signal when receiving a signal from transponder 32. First side 20 generates a larger signal in response to transponder 32 than does second side 22. As a result, the signals do not cancel and an output signal is generated on antenna terminals 26. In this manner, interrogation antenna 12 is sensitive to relatively close field sources, but not to distant field sources.

The center of interrogation antenna 12 is not part of the antenna loop itself due to the folded dipole shape of interrogation antenna 12. Consequently, any metal object located in the center of interrogation antenna 12, such as lock mechanism 14, have a minimal impact on antenna damping and antenna detuning. Further, shielding ring 18 can be disposed intermediate key lock mechanism 14 and interrogation antenna 12 to further shield interrogation antenna 12. Shielding ring 18 can provide optimal antenna Q and limit detuning by shielding any inner metal object.

The field lines of interrogation antenna 12, due to its folded dipole shape, are oriented to receive a signal from key 30 having transponder 32 located asymmetrically in key 30. Field dead zones 24 are positioned such that transponder 32 in key 30 is not within field dead zones 24 when key 30 engages key hole 16.

A technical advantage of the present invention is the use of a folded dipole interrogation antenna providing higher noise robustness and allowing the use of a more simple and lower cost interrogation receiver. The interrogation receiver is not required to be capable of filtering noise to process signals received by the interrogation antenna. A further technical advantage of the present invention is the production of a higher antenna Q, thus lowering power consumption of the interrogation system.

An interrogation antenna constructed according to the teachings of the present invention further provides robustness against detuning and allows preassembly of standard interrogator units for different kinds of key locks. In addition, the antenna field is better focused to the transponder of the key preventing accidental reading of a spare key other than the key engaging the lock mechanism.

Although the present invention has been described in detail, it should be understood that various changes, substitutions and alterations can be made hereto without departing from the spirit and scope of the invention as defined by the appended claims.

## Claims

1. A key lock having an interrogation antenna, comprising:
a lock mechanism; and
an interrogation antenna comprising an antenna winding disposed around the lock mechanism, the antenna winding having a folded dipole shape forming a first side and a second side, such that the first side is field reversed with respect to the second side.

2. The key lock of Claim 1, wherein the interrogation antenna comprises an air coil antenna.

3. The key lock of Claim 1, wherein the interrogation antenna comprises a ferrite core antenna.

4. The key lock of Claim 1, Claim 2, or Claim 3, wherein the lock mechanism comprises a rotating lock cylinder having a key hole.

5. The key lock of any preceding claim, further comprising a shielding ring disposed around the lock mechanism between the lock mechanism and the interrogation antenna.

6. The key lock of any preceding claim, wherein a line connecting field dead zones of the interrogation antenna substantially bisects the lock mechanism.

7. The key lock of any preceding claim, further comprising a first antenna terminal and a second antenna terminal coupled to the interrogation antenna.

8. The key lock of any preceding claim, wherein the key lock is sized to be disposed in the steering column of an automobile.

9. A key lock having an interrogation antenna, as claimed in any preceding claim and including, comprising:
a first antenna terminal coupled to the interrogation antenna;
a second antenna terminal coupled to the interrogation antenna; and
a shielding ring disposed around the rotating lock cylinder and between the rotating lock cylinder and the interrogation antenna.

10. A method of constructing a key lock having an interrogation antenna, comprising the steps of:
providing a lock mechanism; and
disposing an antenna winding around the lock mechanism such that the antenna winding has a folded dipole shape forming a first side and a second side and the first side is field reversed with respect to the second side.

11. The method of Claim 10, wherein the step of disposing an antenna winding comprises the step of disposing an antenna winding such that the interrogation antenna comprises an air coil antenna.

12. The method of Claim 10, wherein the step of disposing an antenna winding comprises the step of disposing an antenna winding such that the interrogation antenna comprises a ferrite core antenna.

13. The method of any of Claims 10 to 12, wherein the step of providing the lock mechanism comprises the step of providing a rotating lock cylinder having a key hole.

14. The method of any of Claims 10 to 13, further comprising the step of disposing a shielding ring around the lock mechanism between the lock mechanism and the interrogation antenna.

15. The method of any of Claims 10 tp 14, wherein the step of disposing comprises the step of disposing the antenna winding such that a line connecting field dead zones of the interrogation antenna substantially bisects the lock mechanism.

16. The method of any of Claims 10 to 15, further comprising the step of connecting a first antenna terminal and a second antenna terminal to the interrogation antenna.

17. The method of any of Claims 10 to 16, wherein step of providing comprises the step of providing a lock mechanism sized to be disposed in the steering column of an automobile.
